# DEMANDE DE BREVET EUROPEEN

(11) **EP 4 063 687 A1**
(43) Date de publication de la demande: **28.09.2022**
(21) Numéro de dépôt: 21164483.6
(22) Date de dépôt: 24.03.2021
(51) Int. Cl.: F16F 9/46, F16F 9/32

(54) **AMORTISSEUR ET SYSTÈME D'AMORTISSEURS DE VÉHICULE**

(71) Demandeur: Robert Bosch GmbH, 70442 Stuttgart (DE)
(72) Inventeur: PERON, Sébastien, 12740 Sebazac (FR)
(74) Mandataire: Cabinet HERRBURGER

(57) **Abrégé**

Amortisseur (2) avec un piston (8) et une soupape (10) pour commander l'ouverture de passage d'un fluide amortisseur et couplée à une unité de commande (12) pour être commandée en fonction des signaux d'une installation de mesure d'inertie (16) pour régler le comportement de l'amortisseur (2),
amortisseur (2) comportant une installation de mesure d'inertie (16, 18) intégrée couplée à l'une unité de commande (12).

## Description

### DOMAINE DE L'INVENTION

La présente invention se rapporte à un amortisseur avec un cylindre d'amortisseur dans lequel est guidé un piston par une tige de piston ainsi qu'une soupape pour commander l'ouverture de passage d'un fluide amortisseur ou l'entrée et la sortie du fluide amortisseur, la soupape étant couplée à une unité de commande pour être commandée en fonction des signaux d'au moins une installation de mesure d'inertie pour régler le comportement de l'amortisseur.

### ETAT DE LA TECHNIQUE

Les véhicules automobiles actuels utilisent des amortisseurs à un comportement réglable. De plus, il est connu d'équiper de tels véhicules de plusieurs capteurs d'accélération fournissant une information concernant les mouvements du véhicule. Une unité centrale de commande reçoit les signaux des différents capteurs d'accélération pour en déduire les adaptations nécessaires ou souhaitées du comportement des amortisseurs. L'unité de commande est reliée aux amortisseurs et peut ainsi actionner des soupapes pour commander le passage d'un fluide amortisseur ou encore l'alimentation ou l'évacuation du fluide amortisseur.

L'équipement du véhicule avec des capteurs d'accélération, le câblage de l'unité de commande relié à tous les amortisseurs et les capteurs d'accélération est une solution compliquée et le montage final se termine toujours par le contrôle du bon fonctionnement.

### BUT DE L'INVENTION

La présente invention a pour but de développer un dispositif alternatif pour adapter le comportement des amortisseurs réduisant les moyens d'intégration.

### EXPOSE ET AVANTAGES DE L'INVENTION

A cet effet, l'invention a pour objet un amortisseur de véhicule du type défini ci-dessus caractérisé qu'il comporte au moins une installation de mesure d'inertie intégrée dans l'amortisseur et couplée à une unité de commande.

L'amortisseur selon l'invention est un amortisseur linéaire ou axial utilisant le mouvement du piston dans un cylindre d'amortisseur. Le comportement d'amortissement peut se régler par la commande d'une soupape. Pour cela, la soupape est intégrée dans l'amortisseur. La soupape permet d'influencer la section d'ouverture libre du canal traversé. Si le piston déplace le liquide amortisseur dans un certain type de construction, le fluide amortisseur est refoulé par le mouvement du piston en passant à travers le canal. La variation active de la section d'ouverture, influence la perte de charge de sorte qu'une force d'amortissement plus ou moins importante s'oppose au mouvement du piston. Dans d'autres types de construction, on adapte, par exemple, la pression du fluide amortisseur pour qu'une soupape débute l'arrivée ou la sortie de liquide et influence ainsi l'amortissement. D'autres variantes sont évidemment également envisageables et ne sont pas exclues.

Une particularité de l'amortisseur selon l'invention est d'intégrer dans l'amortisseur au moins une installation de mesure d'inertie qui est couplée à une unité de commande. L'unité de commande comporte une unité de commande interne et une unité de commande externe. Au moins cette installation de mesure d'inertie transmet des signaux à l'unité de commande pour fournir à l'unité de commande des informations concernant le mouvement du véhicule. Le mouvement le long d'une direction peut se mesurer dans l'espace. Cela se fait avec un capteur d'accélération. Les installations de mesure d'inertie, plus complexes peuvent avoir plusieurs capteurs d'accélération qui mesurent l'accélération dans une direction prédéfinie. L'installation de mesure d'inertie peut, par exemple, être une unité de mesure d'inertie (IMU) à semi-conducteurs et/ou un système de compas mécanique. Une unité de mesure inertielle peut être combinée à un ou plusieurs capteurs d'accélération.

De façon analogue à l'état de la technique présenté ci-dessus, le mouvement permet de déduire une variation souhaitée ou nécessaire du comportement amortisseur. Toutefois, il n'est pas nécessaire d'envoyer toutes les données de mouvement d'une ou plusieurs installations centrales de mesure d'inertie du véhicule vers les amortisseurs.

Ainsi, l'amortisseur comporte au moins un capteur d'accélération, intégré qui peut équiper notamment directement une partie de l'amortisseur relié au châssis du véhicule. Si l'amortisseur est couplé à la roue ou à un bras transversal, la tige de piston étant reliée au châssis, on peut prévoir au moins un capteur d'accélération sur un composant en liaison avec la tige de piston. Cela s'applique, de façon analogue, au cas d'une installation inversée.

L'amortisseur est très largement indépendant des installations externes. Par exemple, à côté d'une installation de mesure d'inertie, intégrée, on peut également intégrer une unité de commande et/ou une unité de liaison sans fil pour permettre une intégration si possible, sans câble, de l'amortisseur. Selon un cas particulier, l'amortisseur selon l'invention présente toutes les caractéristiques qui réalisent la fonction de réglage ou d'adaptation du comportement amortisseur. L'amortisseur doit ainsi uniquement intégrer dans le véhicule concerné et sans ou pratiquement sans câblage, pour remplir sa mission. On évite ainsi les câblages compliqués et les liaisons par enfichage de dimensions correspondantes, ce qui réduit significativement les moyens d'intégration. L'amortisseur selon l'invention peut en outre être contrôlé avant sont intégration dans le véhicule ce qui supprime ainsi une vérification ultérieure après une intégration dans le véhicule. Le temps de montage et le temps des essais sont ainsi réduits.

Selon un développement avantageux, l'unité de commande est intégrée dans l'amortisseur, et en fonction des signaux d'au moins une installation de mesure par inertie, cette unité de commande commande la soupape pour régler le comportement de l'amortisseur. L'unité de commande a l'avantage d'être reliée par une liaison sans fil ou par fil. L'unité de commande et au moins une installation de mesure d'inertie peuvent même former une unité combinée, par exemple, par l'intégration d'un capteur d'accélération à l'unité de commande ou en liaison avec un boîtier de l'unité de commande. L'unité de commande permet de recevoir des signaux d'au moins une installation de mesure par inertie et fournir ainsi une indication concernant le mouvement du véhicule ou le mouvement de l'amortisseur permettant ainsi la commande de la soupape.

Selon un développement avantageux, l'amortisseur a une source d'énergie pour gérer l'unité de commande et/ou la soupape. La source d'énergie est, par exemple, une batterie à accumulateurs rechargeables ce qui permet un fonctionnement autonome de l'amortisseur.

De façon préférentielle, l'amortisseur a au moins un capteur d'accélération intégré dans l'amortisseur et faisant partie de l'installation de mesure d'inertie reliée par l'unité de récepteur à l'unité de commande.

En outre, au moins une installation de mesure d'inertie intégrée dans l'amortisseur comporte deux capteurs d'accélération. Les deux capteurs d'accélération permettent de saisir les accélérations dans des directions différentes, par exemple, la direction longitudinale et la direction transversale.

Selon un autre développement avantageux, l'amortisseur intervient dans la liaison de transmission de signal avec une unité de commande externe et/ou une installation de mesure d'inertie externe et/ou un autre amortisseur. La soupape de réglage du comportement de l'amortisseur est commandée en fonction des signaux reçus par l'unité de commande externe et/ou de l'installation de mesure d'inertie et/ou l'autre amortisseur. L'amortisseur est ainsi en mesure de recevoir les signaux externes qui permettent une commande totale ou complémentaire du comportement d'amortisseur. Une unité de commande externe peut, par exemple, coordiner les différents amortisseurs et/ou permettre une commande complète de l'amortisseur. Cela se traduit par une transmission des signaux par une liaison sans fil. Selon une première option, l'unité de commande externe émet uniquement des signaux de commande simples. Ces signaux peuvent, par exemple, activer un mode de conduite ou d'amortissement particulier pour maintenir celui-ci pendant un certain temps. Toutefois, selon une seconde option, on a une commande continue des amortisseurs en ce que l'on émet en continu des signaux de commande influençant le comportement instantané d'amortissement. Une installation de mesure d'inertie externe peut être prévue à un endroit exposé à l'intérieur du véhicule et fournir aux amortisseurs, des données précises du mouvement du véhicule. On pourrait également envisager de manière préférentielle une liaison sans fil avec les amortisseurs concernés. La liaison avec un autre amortisseur pourrait être prévue pour adapter le comportement d'un amortisseur à celui d'un autre amortisseur. Si un certain amortisseur subit une secousse particulièrement forte ou une accélération particulièrement élevée résultant d'une chaussée localement irrégulière, les autres amortisseurs pourraient être adaptés de façon prévisionnelle dans leur comporte ment. On peut ainsi réaliser des algorithmes de commande différents, à multiples facettes.

En outre, l'amortisseur présente, de préférence, une liaison sans fil pour la transmission du signal. L'unité de liaison sans fil s'appuie sur différents procédés de liaison utilisant, en particulier, des protocoles de transmission connus, appropriés, en fonction des éloignements concernés dans le véhicule. A côté de Bluetooth, ZigBee, ViFi, Ondes-Z et NFC on pourrait également envisager de nombreux autres procédés de communication.

On peut également envisager une forme de réalisation dans laquelle l'unité de commande externe est une unité de commande ABS et/ou ESP, cette unité de commande externe étant conçue pour commander la soupape pour régler le comportement d'amortissement. L'unité de commande externe assure sensiblement la commande complète de la soupape. L'unité de commande externe peut toutefois également n'exécuter qu'une fonction supplémentaire et cela pour le déclenchement de la phase ESR ou ABC en transmettant un signal déterminé aux amortisseurs pour régler leur comportement alors directement sur une grandeur particulièrement appropriée. Il pourrait s'agir, par exemple, de l'accrochage au sol des roues dans le cas concerné pour l'améliorer.

L'invention a également pour objet un système d'amortisseur comportant plusieurs amortisseurs tels que ceux décrits ci-dessus.

Dans un cas simple, le système d'amortisseur comporte une installation centrale de mesure d'inertie, externe installée en dehors des amortisseurs dans le véhicule concerné en étant reliée aux amortisseurs. Cette installation de mesure d'inertie externe peut se trouver dans la zone avant ou arrière du véhicule et communiquer avec tous les amortisseurs.

Suivant une autre caractéristique préférentielle, les amortisseurs, comme indiqué ci-dessus, sont reliés par une liaison de transmission de signaux et sont conçus pour adapter les uns aux autres le comportement des adaptateurs.

### BREVE DESCRIPTION DES DESSINS

La présente invention sera décrite ci-après de manière plus détaillée à l'aide d'un exemple de réalisation représenté dans les dessins annexés dans lesquels :
[Fig. 1] mode de réalisation d'un amortisseur
[Fig. 2] autre mode de réalisation d'un amortisseur
[Fig. 3] autre mode de réalisation d'un amortisseur
[Fig. 4] autre mode de réalisation d'un amortisseur
[Fig. 5] système d'amortisseurs.

### DESCRIPTION DE MODES DE REALISATION

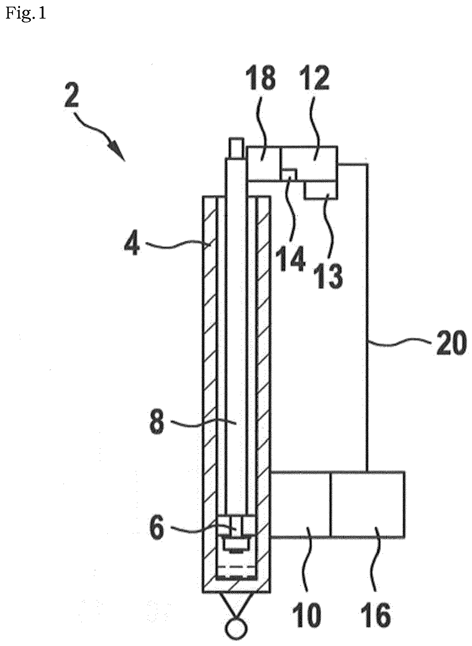

La figure 1 montre un amortisseur 2 de véhicule. L'amortisseur 2 comporte un cylindre 4 recevant un piston 6 guidé par une tige de piston 8. Il est prévu une soupape 10 pour commander l'ouverture de passage du fluide d'amortisseur ou son entrée et sa sortie. En outre, l'amortisseur 2 comporte une unité de commande 12 intégrée dans l'amortisseur 2 et reliée à la soupape 10. L'unité de commande 12 comporte une unité de liaison sans fil 14 pour recevoir les signaux d'une installation de mesure d'inertie formée de deux capteurs d'accélération 16 et 18. Un premier capteur d'accélération 16 est installé sur l'amortisseur 4 alors qu'un second capteur d'accélération 18 est installé sur la tige de piston 8. La tige de piston 8 est, par exemple, reliée à un châssis de façon que le second capteur d'accélération 18 soit également couplé au châssis.

L'unité de commande 12 est, par exemple, reliée par un câble 20 à la soupape 10 et aux capteurs d'accélération 16 et 18. Le second capteur d'accélération 18 peut être prévu également directement dans l'unité de commande 12, par exemple, directement sur la platine de l'unité de commande 12 ou dans ou sur le boîtier de l'unité de commande 12. L'unité de commande 12 règle le comportement de l'amortisseur 2 en fonction des signaux reçus des capteurs d'accélération 16 et 18. L'unité de liaison 14 peut également être réalisée comme unité de liaison sans fil permettant une communication bidirectionnelle. Ainsi, l'amortisseur 2 est relié aux autres amortisseurs 2 et le cas échéant à d'autres composants externes. Plusieurs amortisseurs 2 peuvent communiquer entre eux et adaptent leur comportement. Une source d'énergie 13, par exemple, sous la forme d'une batterie alimente l'énergie électrique notamment l'unité de commande 12 et la soupape 10.

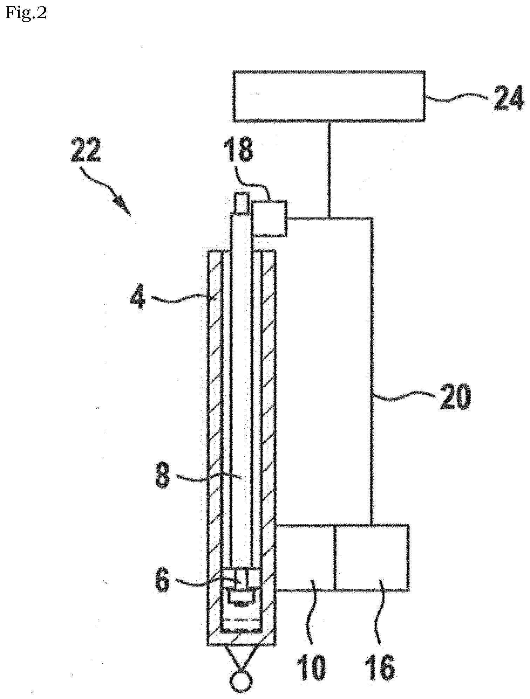

La figure 2 montre une autre variante sous la forme d'un amortisseur 22 relié à une unité de commande externe 24. Celle-ci est indépendante ou une unité de commande ABS et/ou ESP et commande l'amortisseur 22. Par exemple, l'unité de commande externe 24 assure la commande complète pour influencer le comportement d'amortissement ou uniquement commuter le mode de fonctionnement ou le mode de conduite.

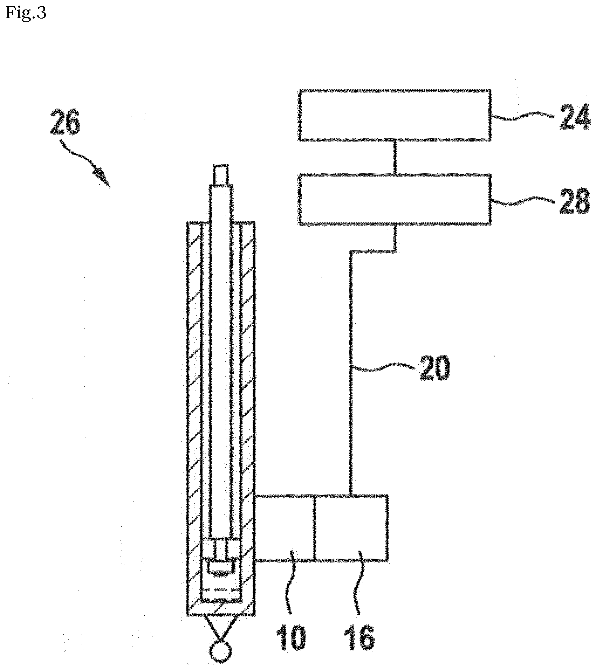

La figure 3 montre un amortisseur 6 couplé à une unité de commande externe 24. En outre, il est relié à une installation de mesure d'inertie 28 externe qui assiste le premier capteur d'accélération 16 pour fournir des informations concernant le mouvement du véhicule. L'installation de mesure d'inertie 28 externe et le premier capteur d'accélération 16 sont reliés directement à l'unité de commande externe 24 qui commande la soupape 10.

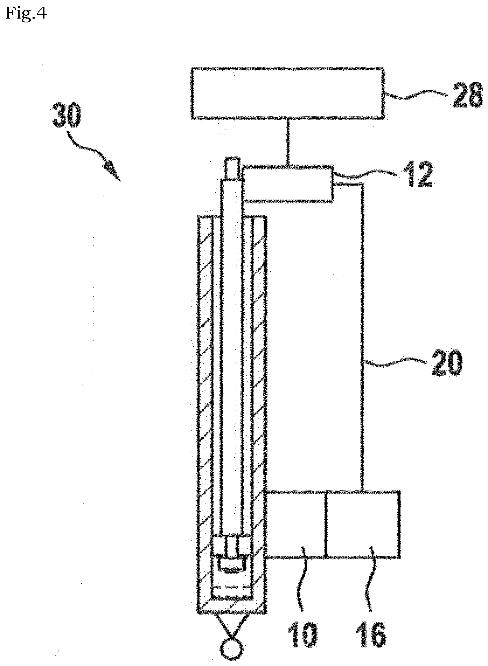

La figure 4 montre un amortisseur 30 muni d'une unité de commande intégrée 12 elle-même reliée à l'installation de mesure d'inertie 28, externe. Cette installation de mesure d'inertie 28 externe et le premier capteur d'accélération 16 sont reliés directement à l'unité de commande intégrée 12 qui commande la soupape 10.

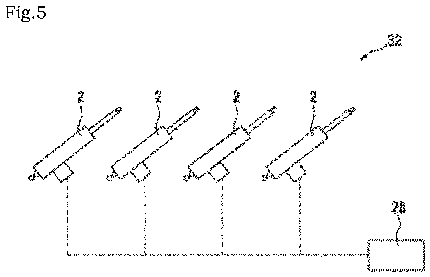

La figure 5 montre en conclusion et de manière schématique, un système d'amortisseurs 32 à plusieurs amortisseurs 12 reliés par des liaisons sans fil. Une installation centrale de mesure d'inertie 28 externe, est en outre en reliée aux amortisseurs pour assister la commande de l'amortissement.

### NOMENCLATURE DES ELEMENTS PRINCIPAUX

2 Amortisseur
4 Cylindre d'amortisseur
6 Piston
8 Tige de piston
10 Soupape
12 Unité de commande
14 Unité de liaison
16 Premier capteur d'accélération
18 Second capteur d'accélération
20 Câble
22 Amortisseur
24 Unité de commande externe
26 Amortisseur
28 Installation de mesure d'inertie
30 Amortisseur
32 Système d'amortisseurs

## Revendications

1. Amortisseur (2, 22, 26, 30) de véhicule comprenant un cylindre d'amortisseur (4) recevant un piston guidé par une tige de piston (8) ainsi qu'une soupape (10) pour commander le passage du liquide d'amortissement ou l'arrivée et la sortie du liquide amortissement, la soupape (10) pouvant être couplée à une unité de commande (12, 24) pour être commandée en fonction des signaux d'au moins une installation de mesure d'inertie (16, 18, 28) pour régler le comportement de l'amortisseur (2, 22, 26, 30),
amortisseur (2, 22, 26, 30) **caractérisé en ce qu'**il comporte
au moins une installation de mesure d'inertie (16, 18, 28) intégrée dans l'amortisseur (2, 22, 26, 30) cette installation pouvant être couplée à une unité de commande (12, 24).

2. Amortisseur (2, 22, 26, 30) selon la revendication 1,
**caractérisé en ce que**
une unité de commande (12) est intégrée dans l'amortisseur (2, 22, 26, 30), cette unité commandant, en fonction des signaux d'au moins une installation de mesure d'inertie (16, 18), la soupape (10) pour régler le comportement de l'amortisseur (2, 22, 26, 30).

3. Amortisseur (2, 22, 26, 30) selon la revendication 1 ou 2,
**caractérisé en ce qu'**il comporte
une source d'énergie (13) pour alimenter le fonctionnement de l'unité de commande (12, 24) et/ou de la soupape.

4. Amortisseur (2, 22, 26, 30) selon la revendication 3,
**caractérisé en ce que**
l'installation de mesure d'inertie (16, 18) intégrée dans l'amortisseur (2, 22, 26, 30) comprend deux capteurs d'accélération (16, 18).

5. Amortisseur (2, 22, 26, 30) selon l'une des revendications 1 à 4,
**caractérisé en ce que**
il est réalisé pour intervenir dans une liaison de signal avec une unité de commande externe (24) et/ou une installation de mesure d'inertie (28) externe et/ou un autre amortisseur (2, 22, 26, 30), la soupape (10) étant commandée pour régler le comportement de l'amortisseur (2, 22, 26, 30) en fonction des signaux reçus de l'unité de commande externe (24) et/ou de l'installation de mesure d'inertie (28) et/ou de l'autre amortisseur (2, 22, 26, 30).

6. Amortisseur (2, 22, 26, 30) selon la revendication 5,
**caractérisé en ce que**
l'amortisseur (2, 22, 26, 30) comporte une unité de liaison sans fil (14) pour réaliser la liaison de transmission de signal.

7. Amortisseur (2, 22, 26, 30) selon la revendication 5 ou 6,
**caractérisé en ce que**
l'unité de commande externe (24) est une unité de commande ABS et/ou ESP (24), cette unité de commande externe (24) actionnant la soupape (10) pour régler le comportement de l'amortisseur.

8. Système d'amortisseurs (32) comportant plusieurs amortisseurs (2, 22, 26, 30) selon l'une quelconque des revendications précédentes.

9. Système d'amortisseurs (32) selon la revendication 8,
**caractérisé en ce qu'**elle comprend
une installation centrale de mesure d'inertie externe (28) installée en dehors des amortisseurs (2, 22, 26, 30) dans le véhicule concerné et reliée aux amortisseurs (2, 22, 26, 30).

10. Système d'amortisseur (32) selon la revendication 8 ou 9,
**caractérisé en ce que**
les amortisseurs (2, 22, 26, 30) sont reliés par la liaison de transmission de signal et sont conçus pour adapter entre eux le comportement des amortisseurs (2, 22, 26, 30).
